# EUROPEAN PATENT APPLICATION

(11) **EP 3 838 692 A1**
(43) Date of publication of application: **23.06.2021**
(21) Application number: 19849996.4
(22) Date of filing: 22.03.2019
(51) Int. Cl.: B60S 5/06

(54) **ROTATING MECHANISM AND BATTERY-SWAPPING ROTATING PLATFORM**

(30) Priority: 13.08.2018 CN 201821297790 U
(71) Applicant: NIO (ANHUI) HOLDING CO., LTD, Economic and Technological Development Zone Hefei Anhui 230601 (CN)
(72) Inventor: ZHOU, Xiaohong, Hong Kong (CN)
(74) Representative: Vossius & Partner Patentanwälte Rechtsanwälte mbB
(86) International application number: PCT/CN2019/079216
(87) International publication number: WO 2020/034638

(57) **Abstract**

Disclosed are a rotating mechanism (100) and a battery-swapping rotating platform. The rotating mechanism (100) comprises: a power source (110) for providing power; a transmission part (120) connected to the power source (110) and transmitting the power provided by the power source (110); and a rotating part (130) comprising a base (131) and a rotating member (132) coupled to each other, wherein the base (131) is mounted to a target fixing position; and the rotating member (132) is connected to a component to be rotated and cooperates with the transmission part (120), and the rotating member (132) and the component to be rotated perform a rotational motion about the base (131). The rotating mechanism and the battery-swapping rotating platform can not only reduce mechanical friction force and the output power of the power source, but can also improve the strength of the component to be rotated, thereby ensuring that the component to be rotated is not deformed after long-term use.

## Description

### Technical Field

The invention relates to the field of tooling, and more particularly to a rotating mechanism and a battery-swapping rotating platform.

### Background Art

With the supply pressure and exhaust pollution brought about by the consumption of conventional fossil energy, the development of conventional fuel vehicles has entered a sluggish period. In view of this, energy-saving and environment-friendly electric vehicles have been developed very fast in recent years due to the favourable prospect of green energy. At present, in the development process of electric vehicles, due to the limitation of current battery technologies, insufficient battery capacity and long charging time are inevitable problems at this stage. In order to solve such technical problems, the research and development investment in the battery technology itself has increased; and the investment in development of peripheral technologies for batteries has also increased. For example, battery swap is a fast, convenient, and safe solution.

In the development of battery swap technology, considering that the separation of a traction battery from occupants makes the vehicle safer and more space-efficient, the technology for battery installation and swap from the chassis has become the mainstream of the battery swap settings. One of the main challenges faced by the battery swap technology is the positioning of a battery swap device relative to a vehicle and a traction battery. The battery swap process in a battery swap station is as follows: a vehicle enters the battery swap station and completes the positioning thereof, and a rail guided vehicle (RGV) drives to a position under the vehicle with a battery to be swapped, starts to receive the battery disassembled from the vehicle after rotating by 90 degrees, and then rotates by 90 degrees again to convey the battery from the position under the vehicle to a charging point. Thereafter, the RGV conveys a fresh battery to the position under the vehicle, installs the fresh battery onto the vehicle after rotating by 90 degrees, and rotates by 90 degrees again to drive away from the battery swap station, thereby completing the battery swap process.

In the battery swap process, the RGV needs to rotate multiple times on a battery swap platform. For example, the battery swap platform needs to complete at least four rotations in the whole battery swap process. In order to achieve the function, a gear and a rack are driven by an electric motor to drive a rotating platform in the prior art, and a lower side of the rotating platform is provided with universal balls to achieve supporting. Such solutions have the following problems: the universal balls are in point contact with the rotating platform, and as a result, the rotating platform is prone to being damaged; a large friction force will be generated when the universal balls make full contact with the rotating platform, and at the moment, the load of the electric motor is too large; because of the large area of the rotating platform, when the number of the contact points between the universal balls and the rotating platform is small, the platform is prone to being deformed; and the rotating frequency in this driving method is low, and the time for completing one rotation is longer.

Therefore, how to provide a rotating platform which is smoother and more efficient becomes one of the technical problems to be solved urgently in this field.

### Summary of the Invention

An object of this application is to provide a rotating mechanism capable of operating smoothly and efficiently.

Another object of this application is to provide a battery-swapping rotating platform capable of operating smoothly and efficiently.

In order to achieve the objects of this application, a rotating mechanism is provided according to one aspect of this application, comprising: a power source for providing power; a transmission part connected to the power source and transmitting the power provided by the power source; and a rotating part comprising a base and a rotating member coupled to each other, wherein the base is mounted to a target fixing position; and the rotating member is connected to a component to be rotated and cooperates with the transmission part, and the rotating member and the component to be rotated perform a rotational motion about the base.

Optionally, the base is configured as one of an inner ring and an outer ring, and the rotating member is configured as the other one of the inner ring and the outer ring, wherein the inner ring and the outer ring are connected via a bearing.

Optionally, the rotating member is configured as the inner ring with an inner periphery being provided with engaging teeth, or as the outer ring with an outer periphery being provided with engaging teeth.

Optionally, the transmission part comprises a first gear cooperating with the engaging teeth on the inner ring or the outer ring of the rotating part.

Optionally, the transmission part further comprises a second gear cooperating with the first gear, and the second gear is connected to the power source.

Optionally, the first gear has a diameter larger than that of the second gear.

Optionally, the ratio of the tooth number of the first gear to that of the engaging teeth is 28 : 112, and/or the ratio of the tooth number of the first gear to that of the second gear is 28 : 17.

Optionally, the power source comprises an electric motor and a speed reducer.

In order to achieve the objects of this application, a battery-swapping rotating platform is hereby provided according to another aspect of this application, comprising a rotating mechanism as described above and a bearing platform, wherein the bearing platform is configured as a component to be rotated, and the rotating member of the rotating part is connected to the bearing platform.

Optionally, the bearing platform is provided with reinforcing ribs perpendicular to one another.

According to the rotating mechanism and the battery-swapping rotating platform of this application, firmer supporting and driving of the component to be rotated are achieved by means of the base and the rotating member coupled to each other, not only can mechanical friction force and the output power of the power source be decreased, but the strength of the component to be rotated can also be improved, thereby ensuring that the component to be rotated is not deformed after long-term use.

### Brief Description of the Drawings

Fig. 1 is a schematic top view of an embodiment of a rotating platform of this application.
Fig. 2 is a schematic bottom view of an embodiment of a rotating platform of this application.

### Detailed Description of Embodiments

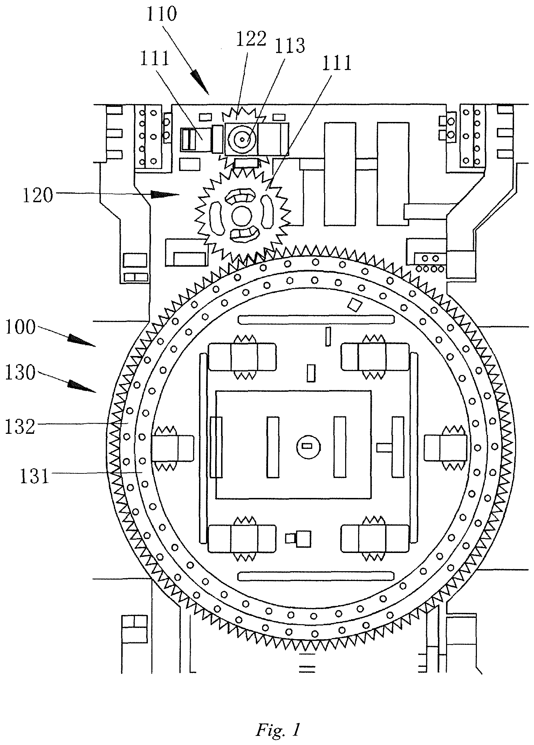

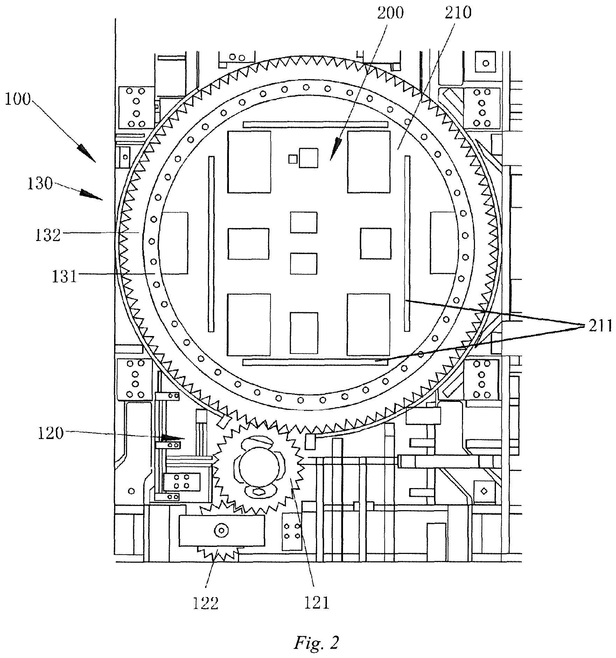

Referring to Figs. 1 and 2, an embodiment of the rotating mechanism is shown from two angles. The rotating mechanism 100 comprises: a power source 110 for providing power; and a transmission part 120 connected to the power source 110 and transmitting the power provided by the power source 110. The rotating mechanism 100 further comprises a rotating part 130, and the rotating part 130 has a base 131 and a rotating member 132 coupled to each other. The base 131 may be mounted to a target fixing position so as to serve as a reference for providing rotational motion; and the rotating member 132 is connected to a component to be rotated and cooperates with the transmission part 120. In this case, the transmission part 120 is driven by the power source 110 to drive the rotating member 132 to rotate about the base 131, and accordingly, the component to be rotated which is installed on the rotating member is driven to perform the same rotational motion.

More specifically, the base 131 shown in Figs. 1 and 2 is configured as an inner ring, the rotating member 132 is configured as an outer ring with engaging teeth, and the inner ring and the outer ring are connected via a bearing. At the same time, the transmission part 120 is configured as a first gear 121 and a second gear 122 engaging with each other. The first gear 121 cooperates with the engaging teeth on an outer periphery of the outer ring serving as the rotating member 132, and the second gear 122 cooperates with an electric motor 111 serving as the power source and a speed reducer 112.

In the rotating mechanism, the torque output by the electric motor 111 is transmitted to the second gear 122 after being decelerated by the speed reducer 112 and is further transmitted to the first gear 121 via the second gear 122, and the outer ring serving as the rotating member 132 is driven by the first gear 121 to rotate such that the component to be rotated which is installed on the outer ring can be driven to rotate at the same time. At the same time, the inner ring, which is connected to the outer ring via the bearing and serves as the base 131, keeps in the fixed designated position and exists as a relative reference basis for the rotational motion.

A battery-swapping rotating platform 200 based on the rotating mechanism 100 is further provided with a bearing platform 210. The bearing platform 210 may be installed on the rotating member 132 of the rotating part 130 via a bolt or another fixing element. In this case, the bearing platform 210 can rotate more smoothly along with movement of the rotating member 132, and can rotate more quickly compared with a connection method using universal balls. Since the bearing platform and the rotating member are fixedly connected, the strength of the bearing platform can be ensured to avoid deformation. In addition, this driving method enables the electric motor to maintain smooth output power without the occurrence of sudden load change, and the service life is prolonged.

Of course, on this basis, a lower portion of the bearing platform may be additionally provided with reinforcing ribs 211, and accordingly, the strength of the bearing platform is further improved. In the embodiment shown in the figures, the reinforcing ribs 211 may be arranged perpendicular to one another so as to further improve the strength of the bearing platform.

Based on this platform, the rotation of a rail guided vehicle (RGV) in the battery swap process can be carried out better, it is ensured that the related battery swap steps can be performed correctly and reliably, and the battery swap performance of a vehicle is thus improved. This platform can certainly achieve the similar technical effect when being applied to other related fields where there is a need to perform a rotation of a workpiece, and unnecessary repetition is omitted here.

One embodiment of this application is described above with reference to Fig. 1 and 2. In fact, under the teachings of this application, the various components may also be changed or modified, as will be illustrated below by way of example.

For example, the base serving as the inner ring and the rotating member serving as the outer ring in the figures are taken as an example for illustration. In fact, however, the base 131 may be configured as one of the inner ring and the outer ring, and the rotating member 132 is configured to the other one of the inner ring and the outer ring. It should be appreciated that when the rotating member exists as the inner ring, the engaging teeth thereon are correspondingly arranged on an inner periphery of the inner ring. In this case, the power source may also be correspondingly arranged on the inner side of the inner ring.

As another example, although the transmission part 120 comprising a gear set is taken as an example in the figures, in fact, the transmission part may comprise only one gear to achieve torque transmitting between the power source and the rotating part. Fewer intermediate elements will correspondingly lead to a more stable torque transmitting process. More intermediate elements can correspondingly change the spacing between the power source and the rotating part, and thus, the layout of the whole set of elements and the installation positions can be adaptively adjusted.

In addition, the first gear 121 has a diameter larger than that of the second gear 122, so that the rotating frequency of the gear is reduced, and the smoother rotation is provided.

Furthermore, through experimental tests, the ratio of the tooth number of the first gear 121 to that of the engaging teeth may be set to 28 : 112, and the ratio of the tooth number of the first gear 121 to that of the second gear 122 may be set to 28 : 17.

The above examples illustrate the rotating mechanism and the battery-swapping rotating platform of this application by way of example and not limitation. Although only some embodiments of this application are described, a person of ordinary skill in the art should understand that this application may be implemented in many other forms without departing from the essence and scope of this application. Therefore, the presented examples and embodiments are deemed as illustrative rather than restrictive, and without departing from the spirit and scope of this application defined by the appended claims, this application may cover various modifications and substitutions.

## Claims

1. A rotating mechanism, **characterized by** comprising:
a power source for providing power;
a transmission part connected to the power source and transmitting the power provided by the power source; and
a rotating part comprising a base and a rotating member coupled to each other, wherein the base is mounted to a target fixing position; and the rotating member is connected to a component to be rotated and cooperates with the transmission part, and the rotating member and the component to be rotated perform a rotational motion about the base.

2. The rotating mechanism according to claim 1, **characterized in that** the base is configured as one of an inner ring and an outer ring, and the rotating member is configured as the other one of the inner ring and the outer ring, wherein the inner ring and the outer ring are connected via a bearing.

3. The rotating mechanism according to claim 2, **characterized in that** the rotating member is configured as the inner ring with an inner periphery being provided with engaging teeth, or as the outer ring with an outer periphery being provided with engaging teeth.

4. The rotating mechanism according to claim 3, **characterized in that** the transmission part comprises a first gear cooperating with the engaging teeth on the inner ring or the outer ring of the rotating part.

5. The rotating mechanism according to claim 4, **characterized in that** the transmission part further comprises a second gear cooperating with the first gear, and the second gear is connected to the power source.

6. The rotating mechanism according to claim 5, **characterized in that** the first gear has a diameter larger than that of the second gear.

7. The rotating mechanism according to claim 5, **characterized in that** the ratio of the tooth number of the first gear to that of the engaging teeth is 28 : 112; and/or the ratio of the tooth number of the first gear to that of the second gear is 28 : 17.

8. The rotating mechanism according to any one of claims 1 to 7, **characterized in that** the power source comprises an electric motor and a speed reducer.

9. A battery-swapping rotating platform, **characterized by** comprising: a rotating mechanism according to any one of claims 1 to 8, and a bearing platform, wherein the bearing platform is configured as a component to be rotated, and the rotating member of the rotating part is connected to the bearing platform.

10. The battery-swapping rotating platform according to claim 9, **characterized in that** the bearing platform is provided with reinforcing ribs perpendicular to one another.
